# EUROPÄISCHE PATENTSCHRIFT

(11) **EP 0 560 829 B1**
(45) Veröffentlichungstag und Bekanntmachung des Hinweises auf die Patenterteilung: **29.10.1997**
(21) Anmeldenummer: 92900050.3
(22) Anmeldetag: 03.12.1991
(51) Int. Cl.: C09J 103/08, C09J 103/00

(54) **STÄRKEHALTIGE DISPERSIONS-KLEBSTOFFE UND VERFAHREN ZU IHRER HERSTELLUNG**
STARCH-CONTAINING DISPERSION GLUE AND PROCESS FOR PRODUCING THE SAME
COLLES A DISPERSION CONTENANT DE L'AMIDON ET LEUR PROCEDE DE PRODUCTION

(30) Priorität: 05.12.1990 DE 4038700
(43) Veröffentlichungstag der Anmeldung: 22.09.1993
(73) Patentinhaber: Henkel Kommanditgesellschaft auf Aktien, 40191 Düsseldorf (DE)
(72) Erfinder: RITTER, Wolfgang, D-5657 Haahn (DE); GARDENIER, Karl-Josef, D-4000 Düsseldorf 13 (DE); KEMPF, Wolfgang, D-4047 Dormagen 1 (DE)
(86) Internationale Anmeldenummer: EP9102296
(87) Internationale Veröffentlichungsnummer: WO9210554

(56) Entgegenhaltungen:
- EP-A- 134 451
- DE-C- 970 198
- GB-A- 1 014 801

## Beschreibung

Die Erfindung betrifft ein vereinfachtes neuartiges Verfahren zur Herstellung stärkehaltiger Dispersions-Klebstoffe, die im allgemeinen als thermoplastisch erweichbare synthetische Polymerverbindungen mit Klebstoffcharakter zusammen mit Stärke oder Stärkederivaten vorliegen, die durch Wassereinwirkung aufgeschlossen worden sind. Die nach dem erfindungsgemäß vereinfachten Verfahren hergestellten Dispersions-Klebstoffe können in an sich bekannter Verarbeitungstechnik, zum Beispiel als Schmelzkleber oder nach Redispergierung in insbesondere wäßriger Dispersion weiterverarbeitet werden. Die unmittelbaren Produkte des erfindungsgemäßen Verfahrens sind Klebstoffe in Trockenform, deren Beschaffenheit dem beabsichtigten Verarbeitungszweck angepaßt sein kann. Für den Einsatz als Redispergier-Materialien können dementsprechend die erfindungsgemäß hergestellten Kombinationsklebstoffe in Pulverform vorliegen.

Stärkehaltige Dispersions-Klebstoffe werden üblicherweise durch Vermischung von wäßrigen Polymer-dispersionen, zum Beispiel Polyvinylacetat-, Polyacrylat- oder in Ausnahmefällen Polyurethan-dispersionen, mit Stärkelösungen hergestellt. Die als die eine Mischungskomponente eingesetzten Polymer-dispersionen weisen dabei üblicherweise einen Wassergehalt im Bereich von etwa 40 - 60 Gew.-% und insbesondere Wassergehalte im Bereich von etwa 45 - 50 Gew.-%, auf. Die damit zur Verarbeitung kommenden Stärkelösungen besitzen üblicherweise einen erheblich niedrigeren Feststoffgehalt der beispielsweise im Bereich von etwa 10 Gew.-% liegen kann. Damit sind in den Stärke/Dispersionsmischungen sehr beträchtliche Wassergehalte vorgegeben.

Zur Herstellung redispergierbarer Klebstoffpulver oder Granulate aus diesen stark wasserhaltigen Stoffmischungen bedarf es der Wasserverdampfung. Die hohen Wasseranteile im zu trocknenden Gut erfordern einen entsprechend hohen Energie- und Investitionsaufwand. Es bestehen zahlreiche Vorschläge für die Herstellung und nachfolgende Trocknung solcher Kombinationsklebstoffe, wobei beispielsweise Trocknungen in der Sprühzone und/oder Wirbelschicht vorgeschlagen werden. Aus dem einschlägigen Stand der Technik wird beispielsweise verwiesen auf DE 37 34 491.

Schon in der DE 970 198 wird ein Verfahren zur Herstellung von wasserlöslichen stärkehaltigen Trockenklebstoffen beschrieben, das dadurch gekennzeichnet ist, daß man eine Mischung einer wäßrigen Dispersion von wasserunlöslichen Polyvinylverbindungen mit Stärke oder einer Suspension von Stärke in dünner Schicht in ansich bekannter Weise auf über 100 °C erhitzten Flächen trocknet. Der Stärkegehalt des Trockenproduktes beträgt dabei wenigstens 1/3. Die Lehre dieser Druckschrift schildert im einzelnen die Schwierigkeiten, die bei der Trocknung von synthetischen Klebstoffdispersionen, beispielsweise entsprechenden Polyvinyldispersionen, bestehen. So ist es bekannt, wäßrige Dispersionen bzw. Emulsionen von Polyvinylverbindungen für sich durch Zerstäubungstrocknung zu trocknen. Hierbei ist man aber gezwungen, die Trocknung in äußerst kurzer Zeit durchzuführen und dabei niedrige Temperaturen von beispielsweise 50 °C und höchstens 85 °C nicht zu übersteigen. Die Auftrocknung bei höheren Temperaturen führt zu einer Verfilmung der dispergierten bzw. emulgierten Polymerteilchen unter gleichzeitiger Ausbildung wasserunlöslicher Filme. Nur wenn die Auftrocknungsbedingungen nach der Lehre dieser Druckschrift so gewählt werden, daß - ohne Eintrag von Scherenergie während des Auftrocknungsprozesses - im Trockenprodukt die synthetischen Polymerteilchen jeweils von wasserlöslicher Quellstärke umhüllt und gegeneinander abgeschirmt sind, soll die Löslichkeit des Trockenproduktes gewährleistet sein.

Die Erfindung geht von der Aufgabe aus, stärkehaltige Dispersions-Klebstoffe dadurch in vereinfachter Weise zugänglich zu machen, daß von vornherein der in das Mischverfahren eingebrachte Wasseranteil auf den zum Stärkeaufschluß benötigten Wasserbetrag eingeschränkt wird, wobei weiterhin dieser Wasserbetrag vollständig oder wenigstens anteilsweise durch die Wasserphase aus der wäßrigen Polymer-dispersion geliefert wird. Die Erfindung sieht dabei vor, den wäßrigen Stärkeaufschluß und die Vermischung der Stärke mit der wäßrigen Polymer-dispersion in einem Verfahrensschritt vorzunehmen, so daß als unmittelbares. Verfahrensprodukt der gewünschte stärkehaltige Dispersions-Klebstoff in Trockenform erhalten werden kann.

Bevor auf Einzelheiten der erfindungsgemäßen Lehre eingegangen wird, ist auf jüngere Entwicklungen aus dem Gebiet der modernen Stärketechnologie zu verweisen, die einen integralen Bestandteil der Erfindung darstellen.

Vorschläge aus den letzten Jahren beschäftigen sich mit dem Versuch native Stärke und/oder Stärkederivate zusammen mit beschränkten Mengen an Wasser und/oder weiteren Hilfsstoffen durch thermomechanischen Aufschluß zu einem thermoplastischen Material umzuwandeln. Dieser Aufschluß unter Einsatz erhöhter Temperaturen und Drucke ist dabei insbesondere in konventionellen Extrudern möglich. Aus dem umfangreichen Schrifttum sei hier verwiesen auf die Veröffentlichung R.F.T. Stepto et al. Injection Moulding of Natural Hydrophilic Polymers in the Presence of Water; CHIMIA 41 (1987) Nr. 3, 76 - 81, sowie die dort zitierte Literatur.

Zum einschlägigen Stand der Technik wird weiterhin verwiesen auf die GB 1 014 801. Beschrieben ist hier ein Verfahren zur Thermoplastifizierung von Stärke, bei dem die Einsatzstärke mit ihrem natürlichen Feuchtigkeitsgehalt von beispielsweise 12 % mit beschränkten Mengen zusätzlichen Wassers oder Glycerins vermischt und dann unter gleichzeitiger Kühlung der Einwirkung von Scherkräften ausgesetzt wird. Zur Kühlung des Reaktionsgemisches werden Kühlflüssigkeiten mit Temperaturen unterhalb der Umgebungstemperatur eingesetzt. Die Dauer der Scherbeanspruchung unter dieser Bedingungen liegt im Bereich einer halben Stunde.

Umfangreiche Arbeiten beschäftigen sich mit der Verbesserung der Produkteigenschaften in der thermoplastifizierten Stärke durch Einsatz oder Mitverwendung ausgewählter organischer Hilfsflüssigkeiten beim Stärkeaufschluß. Als Beispiel sei hier benannt die PCT-Patentanmeldung WO 90/05 161. Hier wird vorgeschlagen, der nativen oder natürlichen Stärke Zuschlagstoffe beizumischen, welche die Schmelztemperatur der Stärke erniedrigen und dabei durch einen bestimmten Löslichkeitsparameter zusätzlich gekennzeichnet sind. Als Zuschlagstoffe sind insbesondere niedere -polyfunktionelle Alkohole wie -Etylenglykol, Propylenglykol, Glycerin, 1,3-Butandiol, Di-glycerid, entsprechende Ether, aber auch Verbindungen wie Di-methylsulfoxid, Di-methylformamid und dergleichen, benannt.

Jüngere Vorschläge beschäftigen sich mit dem Versuch, thermoplastifizierte Stärke der geschilderten Art mit synthetisch gewonnenen wasserfesten Polymerverbindungen so zu vereinigen, daß die hydrophile Polymerverbindung auf Stärkebasis erhöhte Beständigkeit gegenüber hydrophilen Lösungsmitteln, insbesondere gegenüber Wasser, aufweist. Verwiesen sei hier auf die EP-A2 327 505. Geschildert sind hier Polymermischmaterialien, die aus einer Schmelze von wasserhaltiger destrukturisierter Stärke und wenigstens einer im wesentlichen wasserunlöslichen synthetischen thermoplastischen Polymerverbindung gewonnen werden. Im einzelnen wird dabei wie folgt vorgegangen: Zunächst wird aus Stärke in unbehandelter oder vorbehandelter Form unter Zusatz von Hilfsstoffen, insbesondere Wasser, durch Behandlung in einem Extruder bei erhöhten Temperaturen - beispielsweise 175°C - und den sich dabei einstellenden erhöhten Eigendrucken thermoplastifizierte Stärke gewonnen und zu Granulaten aufgearbeitet. Der Wassergehalt im Granulatkorn wird etwa auf den Bereich des Wassergehalts natürlicher Stärke (17 %) eingestellt. Diese Stärkegranulate werden dann in vorgegebenen Mischungsverhältnissen mit synthetischen Polymerverbindungen im Trockenzustand vermischt. Die Polymergemische werden dann in konventioneller Weise auf einer Spritzgußvorrichtung bei einer Guttemperatur von 165°C, einer Zykluszeit von etwa 15 Sekunden und einem Formpressdruck von etwa 1.600 bar und einem Rückdruck von etwa 75 bar, zu Formteilen verarbeitet. Die untersuchten Mischungsverhältnisse im jeweiligen Polymergemisch liegen dabei im Bereich von 0,5 - 20 Gew.-% an zugesetzter Polymerverbindung synthetischen Ursprungs.

Die Erfindung greift die in all diesen Vorschlägen beschriebene Möglichkeit auf, Stärke beziehungsweise Stärkederivate durch eine Behandlung bei erhöhten Drucken und Temperaturen - beispielsweise in geschlossenen Knetern und/oder Extrudern - unter Einsatz begrenzter Wassermengen derart zu modifizieren, daß aufgeschlossene Stärke in thermoplastisch verarbeitbarem Zustand anfällt. Die Lehre der Erfindung geht von der Erkenntnis aus, daß diese derart thermoplastifizierte Stärke in inniger Abmischung mit den auf dem erfindungsgemäßen Sachgebiet üblicherweise eingesetzten synthetischen Polymerverbindungen mit Klebstoffcharakter ein Material mit den gewünschten Klebereigenschaften liefern kann.

### Gegenstand der Erfindung

Gegenstand der Erfindung ist dementsprechend in einer ersten Ausführungsform ein vereinfachtes Verfahren zur Herstellung von stärkehaltigen Dispersions-Klebstoffen in Trockenform aus einer Mischung von wäßrigen Dispersionen synthetischer Polymerverbindungen mit Klebstoffcharakter und wasserhaltiger Stärke und/oder Stärkederivaten. Das Verfahren ist dadurch gekennzeichnet, daß man die Stärke und/oder Stärkederivate in Form feinteiliger Feststoffe einsetzt und zunächst mit den wäßrigen Polymer-dispersionen und gewünschtenfalls weiteren niedermolekularen Plastifizierungsmitteln vermischt, diese Mehrstoffmischung bei Temperaturen von wenigstens 90 °C und erhöhten Drucken bei Verweilzeiten des Mehrstoffgemisches unter Arbeitsbedingungen von 0,5 bis 10 min bei gleichzeitigem weiteren intensiven Vermischen dem Stärkeaufschluß unter Bildung thermoplastisch verarbeitbarer Stärke unterwirft und gewünschtenfalls das homogenisierte Polymergemisch formgebend aus der Schmelzphase verarbeitet. Erfindungsgemäß kann insbesondere vorgesehen sein, das homogenisierte Polymerengemisch, zweckmäßigerweise nach der Abkühlung, einer weiterführenden Zerkleinerung zu unterwerfen. Auf diese Weise können redispergierbare Klebstoffpulver in Trockenform erhalten werden.

Die Erfindung betrifft weiterhin die nach dem erfindungsgemäßen Verfahren herstellbaren Klebstoffe in Trockenform, die Emulsions-(co)-polymere in inniger Abmischung mit thermoplastisch aufgeschlossener Stärke und/oder entsprechend aufgeschlossenen Stärkederivaten enthalten, wobei der Stärkeaufschluß bei erhöhten Drucken und Temperaturen von wenigstens 90 °C und unter Zusatz der wäßrigen Polymer-dispersionen in Gegenwart der Emulsions-(co)-polymeren unter intensivem Vermischen des Mehrkomponentengemisches vorgenommen worden ist.

### Einzelheiten zur erfindungsgemäßen Lehre

Der Kern des erfindungsgemäßen Handelns liegt damit in der Kombination der folgenden Elemente zu einem in an sich bekannter Weise einfach durchzuführenden Verfahrensschritt: Das Einsatzmaterial auf Stärke-Basis wird mit einer sehr beschränkten Wassermenge, jedoch bei erhöhten Temperaturen und Drucken, aufgeschlossen und zu thermoplastischen Stärkematerial umgewandelt. Dieser Schritt wird in Gegenwart des synthetischen Polymermaterials aus der letztlich angestrebten Kleberkomposition durchgeführt. Dabei wird dieser synthetische Kleber-Anteil der Stärkeaufschlußstufe als wäßrige Dispersion zugeführt, wie sie in den üblichen Emulsions-polymerisaten beziehungsweise Emulsionscopolymerisaten heute allgemein zur Verfügung stehen. Schließlich wird gerade der Wasseranteil dieser wäßrigen Dispersion für den Stärkeaufschluß unter den angegebenen Verfahrensbedingungen verwertet. Falls erforderlich, können zusätzliches Wasser und/oder weitere niedermolekulare Plastifizierungsmittel der eingangs geschilderten Art hier mitverwendet werden.

In der Summe dieser Elemente entsteht ein Verfahren, das die Kombination der Kleberkomponenten natürlichen und synthetischen Ursprungs in inniger Abmischung und dabei in Trockenform als Verfahrensprodukt liefert. Kostenspielige Trocknungsverfahren sind nicht mehr erforderlich.

Die im Verfahren einzusetzende Stärke kann beliebigen Ursprungs sein. Stärkelieferanten wie Kartoffeln, Mais, Reis, Tapioca, die üblichen Getreidesorten und dergleichen, sind hier in erster Linie zu nennen. Die Stärke wird bevorzugt in Pulverform und zwar insbesondere als rieselfähiges Pulver in das Verfahren eingebracht. Sie kann gewünschtenfalls Vorbehandlungen unterworfen werden, wie einer Partialtrocknung, einer Säurewäsche und/oder weiteren Vorbehandlungen, insbesondere zur physikalischen Modifizierung der Stärke. Der Wassergehalt des Stärkeeinsatzmaterials kann dabei in einem weiten Bereich schwanken und beispielsweise etwa 5 - 40 Gew.-% - bezogen auf Stärkeeinsatzmaterial - ausmachen. Üblicherweise wird der Wassergehalt des Stärkeeinsatzmaterials wenigstens etwa 10 Gew.-% betragen und liegt häufig im Bereich von etwa 10 - 25 Gew.-%.

Neben oder anstelle nativer Stärke können Stärkederivate als die eine Kleberkomponente in das erfindungsgemäße Verfahren eingebracht werden. Geeignet sind hier insbesondere Derivate mit erhöhter Wasserlöslichkeit gegenüber nativer Stärke, wobei hier insbesondere Hydroxyalkylstärken in Betracht kommen können.

In den erfindungsgemäßen Mehrstoffgemischen macht die thermoplastische Stärke im allgemeinen einen Mengenanteil von wenigstens etwa 50 Gew.-% aus. Die Mengenangabe bezieht sich hier auf das wasserfreie und/oder von Plastifizierungsmitteln freie Feststoffgemisch. Bevorzugt sind allerdings vergleichsweise stärkereiche Mehrstoffgemische, in denen die Stärkemenge den entsprechenden Anteil der synthetischen Polymerverbindung überwiegt. So liegen in bevorzugten Mischungen diese synthetischen Polymerverbindungen mit Klebstoffcharakter in Mengen unterhalb 40 Gew.-% und insbesondere im Mengenbereich von etwa 10 - 30 Gew.-% vor - bezogen wiederum auf wasserfreies und/oder von Plastifizierungsmitteln freies Feststoffgemisch.

Neben oder anstelle eines Anteils des im Gemisch eingesetzten Wassers können niedere organische Weichmacher, beziehungsweise Plastifizierungsmittel der eingangs genannten Art, mitverwendet werden. In Betracht kommen dementsprechend hier insbesondere niedere polyfunktionelle Alkohole wie Ethylenglykol, Propylenglykol, Butandiol, Glycerin und/oder deren Ether, insbesondere Partialether. Der Mengenanteil solcher niedermolekularen organischen, insbesondere mit der Stärke verträglichen Hilfskomponenten liegt im Falle ihrer Mitverwendung bei wenigstens etwa 5 Gew.-%, zweckmäßigerweise im Bereich von wenigstens etwa 10 Gew.-%, und kann insbesondere bei etwa 10 - 20 Gew.-% liegen jeweils bezogen auf Gesamtgemisch. In wichtigen Ausführungsformen der Erfindung wird allerdings auf die Mitverwendung dieser Hilfskomponenten verzichtet.

Als thermoplastische Polymerverbindungen mit Klebstoffcharakter sind alle in diesem Zusammenhang bekannten Komponenten geeignet, die sich insbesondere im Rahmen einer Emulsions-polymerisation oder Emulsionscopolymerisation herstellen lassen und als primäres Verfahrensprodukt dann die wäßrige Phase mit einbringen, die im erfindungsgemäßen Mischund Aufschlußverfahren zum thermoplastischen Stärkeaufschluß verwendet wird. Beispiele für solche bekannten thermoplastischen Polymerverbindungen mit Klebstoffcharakter sind Polyvinylacetat, Polyvinylpropionat, Poly(meth)acrylat-harze und/oder entsprechende Co-polymere, aber auch Polyurethan-harze. Geeignet sind insbesondere synthetische Polymerverbindungen mit Schmelzpunkten oder wenigstens einer deutlichen Erweichung im Temperaturbereich von etwa 100 bis 220°C, vorzugsweise im Bereich von etwa 100 bis 190°C.

Das Misch- und Stärkeaufschlußverfahren wird in Vorrichtungen derart durchgeführt, wie sie für den thermoplastifizierenden flufschluß von Stärke mit Wasser und/oder niederen organischen Hilfskomponenten der geschilderten Art an sich bekannt sind. Der Misch- und Stärkeaufschlußschritt wird dementsprechend in geschlossenen Knetern oder vorzugsweise in Extrudern durchgeführte Dabei werden die Verweilzeit und die Verarbeitungsbedingungen derart aufeinander abgestimmt, daß sowohl der Stärkeaufschluß, wie eine möglichst innige Einmischung der plastifizierten synthetischen Polymerkomponenten in die Gesamtmischung sichergestellt sind.

Die einzelnen Mischungskomponenten können der jeweils eingesetzten Arbeitsvorrichtung, beispielsweise also dem Extruder, im Einzugsbereich getrennt und vorzugsweise kontinuierlich in der jeweils benötigten Menge zugeführt werden. Bei dem Transport des Mehrkomponentengemisches im Extruder findet in den vorderen Abteilungen, insbesondere der angestrebte Homogenisierungs- und Vermischungsvorgang statt. Es schließt sich eine Verarbeitungsstrecke an, die unter Produkttemperaturen und Drucken gehalten wird, die zu dem angestrebten thermoplastifizierenden Stärkeaufschluß führen. Wenigstens hier liegen die Produkttemperaturen bei wenigstens 90 °C und vorzugsweise oberhalb 100 °C,
wobei Arbeitsbedingungen im Bereich bis etwa 170°C, insbesondere im Bereich von etwa 100 - 150°C wenigstens in den Endphasen des Mischund Stärkeaufschlußverfahrens, bevorzugt sein können. Der sich einstellende Arbeitsdruck entspricht üblicherweise dem Eigendruck des wasserhaltigen Stoffgemisches bei der vorgegebenen Arbeitstemperatur. Die Verweilzeiten des Mehrstoffgemisches unter den Arbeitsbedingungen betragen wenigstens im Bereich der Temperatur- und Druckbedingungen zum thermoplastischen Stärkeaufschluß 0,5 bis 10 Minuten und liegen hier vorzugsweise im Bereich von etwa 1 bis 5 Minuten.

Gewünschtenfalls kann dem Polymerblend in einer abschließenden Verfahrensstufe oder während der letzten Arbeitsstufe der Vermischung und des Aufschlußes ein Anteil des zum Misch- und Aufschlußvorgang zugesetzten Wassers entzogen werden. Möglich ist das bereits durch Abdampfen eines entsprechenden Wasseranteils im Rahmen des Misch- und Aufschlußverfahrens nach der hinreichenden Verwirklichung der angestrebten Umsetzungen. Ebenso können aber auch die primär anfallenden Produkte einer Nachtrocknung durch Wasserabreicherung unterworfen werden.

Das homogenisierte Polymerblend kann als Extrudat mit beliebigen Raumformen, insbesondere als Granulat, gewonnen werden. Ebenso ist es aber auch möglich, das Polymermischprodukt unmittelbar im Anschluß an seine Gewinnung oder zu einem späteren Zeitpunkt, nach hinreichender Abkühlung zu einem trockenen, üblicherweise schutt- und rieselfähigen Feinprodukt zu zerkleinern, wobei hier in erster Linie auch die Vermahlung zu einem trockenen Pulver in Betracht kommt. Pulver dieser Art sind lagerbeständig und können zum praktischen Einsatz durch intensives Einmischen in Wasser beziehungsweise wäßrige Lösungen zur Klebstoffpaste redispergiert werden. Je nach Beschaffenheit des Stoffgemisches im Einzelfall können höhere oder geringere Lagerstabilitäten in solchen Pasten bestimmt werden. Der Anwender kann sich von Fall zu Fall die von ihm benötigten Klebstoffmengen durch Einrühren in Wasser, oder eine wäßrige Phase herstellen.

Die erfindungsgemäß erhaltenen Mischkleber in Trockenform, können in jeder beliebigen Zubereitungsform angewendet werden. Neben den Möglichkeiten der Redispergierung entsprechender Pulver eignen sich die erfindungsgemäßen Trockenmaterialien ganz allgemein als Klebstoffkonzentrate und/oder als Schmelzkleber.

### Beispiele

### Beispiel 1

### System Hydroxypropylstärke (DS=0,1)/dextrinverträgliche Polyvinylacetatdispersion

### a) Die Extrudatherstellung

Die Herstellung redispergierbarer, stärkehaltiger Dispersions-Klebstoffe erfolgt durch die Extrusion von 12,0 kg/h Hydroxypropylstärke (DS=0,1; Emcol HE/E; Fa. Emsland-Stärke GmbH, Emlichheim) mit 3 kg/h dextrinverträglicher Polyvinylacetatdispersion (Wormalit VN 4405; Feststoffgehalt: 60%; Schutzkolloid: Stärkeether - Fa. Cordes & Co GmbH, Porta Westfalica) in einem Extruder folgender Auslegung:

| | |
|---|---|
| Extruder | Fa. Werner & Pfleiderer Continua 37 |
| Arbeitsweise | gleichläufiger Zweischneckenextruder |
| Schneckendurchmesser | 37 mm |
| Länge | 26 D |
| Drehmoment je Welle | 90 Nm |
| Antriebsleistung | 9,5 kW |

In eine nicht beheizte Einzugszone werden die beiden Ausgangssubstanzen angemischt und an verschiedenen Stellen zudosiert. Zunächst erfolgt die Zudosierung der festen, pulverförmigen Hydroxypropylstärke über eine Dosierschnecke. Kurz dahinter (1D) erfolgt die Zudosierung der flüssigen Polymerdispersion mit Hilfe einer Zahnradpumpe von oben in den Extruder.

Die anschließende Mischstrecke sorgt für eine homogene Durchmischung der festen und flüssigen Phase. Um parallel eine Aufheizung der Mischung zu erzielen, wird der Extruder auf der Länge D=5 bis D=12 extern beheizt (Heizmedium - Temperatur: 80°C), In der zweiten Hälfte des Extruders erfolgt ein thermomechanischer Aufschluß der Hydroxypropylstärke, der zu einer Plastifizierung des Materials führt. Parallel findet eine Durchmischung der, in der geschmolzenen Form vorliegenden, thermoplastischen Stärke mit dem Polymeranteil der Dispersion statt. Der Energieeintrag erfolgt sowohl durch externe Beheizung als auch durch die intensive mechanische Bearbeitung durch die Knetelemente. Auf der Länge 13 D bis 25 D beträgt die Heizmedium-Temperatur ebenfalls 80°C. Das thermoplastische Material wird durch eine Lochplatte mit 2 Löchern a 2,5 mm Durchmesser gedrückt, wodurch das Material in Form von flexiblen Strängen erhalten wird.

Die Verfahrensparameter am Extruder werden wie folgt eingestellt:

| | |
|---|---|
| Heizmediumtemperatur T₁ = | 80°C |
| Heizmediumtemperatur T₂ = | 80°C |
| Gesamtdurchsatz= | 15 kg/h (80% HPS) |
| Drehzahl= | 160 UpM |

Unter diesen Bedingungen stellen sich folgende Meßgrößen ein:

| | |
|---|---|
| Austrittstemperatur | 127-135°C |
| Temperatur im Extruder | 103-105°C |
| Drehmomentanzeige | 59-62% |
| Verweilzeit: | abgeschätzt: 40 sec - 4 min |

Unter diesen Bedingungen ist ein Produkt mit folgendem Eigenschaftsbild erhältlich:

| | |
|---|---|
| Aussehen | leicht gelblich, blasig trüb, glatte, glänzende Oberfläche |
| Mechanik | flexibel, leicht zu zerreißen |
| Klebrigkeit | nein |

Unter der Annahme, daß bei der Extrusion kein Wasser (oder andere Bestandteile oder eventuelle Reaktionsprodukte) verdampft, hat das Extrudat folgende Zusammensetzung:

| | |
|---|---|
| Hydroxypropylstärke | 64% |
| Polyvinylacetat | 12% |
| Wasser | 24% |

### b) Die Herstellung einer Redispersion mit 40% Feststoffgehalt

In ca. 500 g VE-Wasser werden 526,3 g des oben beschriebenen Extrudates in geschnittener Form bei ca. 50°C zugegeben. Diese Mischung wird mit einem Scherblattrührer (Ultraturax) bei ca. 600 UpM (ca. 1-1,5h) bei 90°C gerührt, bis eine homogene Dispersion vorliegt. Anschließend wird mit VE-Wasser auf 1000 g (Gewicht der Dispersion) aufgefüllt und mit 5 g Formalin konserviert. Man erhält eine Dispersion mit folgender Spezifikation:

| | |
|---|---|
| Feststoffgehalt | 40% |
| Stärkeanteil am Feststoff | 84,2 Gew.-% |
| Aussehen | leicht grau, homogen, stippenfrei |
| Klebtest | nach ca. 30 sec. Papierriß |
| Lagerstabilität | besser als 1 Woche |
| ph-Wert | 5 |
| Viskosität | 109.000 m Pas (24°C; Brookfield) |

Der Klebtest wurde nach folgendem Verfahren durchgeführt: Mit Hilfe eines Spatels wird ein dünner Film der Dispersion auf ein Blatt Papier aufgebracht. Anschließend wird ein zweites Blatt Papier auf diese Dispersionsschicht gedrückt, so daß die beiden Blätter zusammenkleben. Danach werden die beiden Blätter mit langsamer, konstanter Geschwindigkeit auseinandergezogen. Gemessen wird dabei der Zeitraum zwischen dem Zusammenfügen der beiden Blätter und dem ersten Auftreten eines Papierrisses.

In den nachfolgenden Beispielen 2 - 4 wird auf eine detaillierte Beschreibung der Extrusion verzichtet, da sie analog der aus Beispiel 1 ist. Weitere Beispiele (5 - 24) sind als Tabelle zusammengefaßt. Auch hier entspricht die prinzipielle Vorgehensweise der aus Beispiel 1. Die Tabelle enthält die Zusammensetzung und die Mengen der festen und der flüssigen Phasen, die separat in den Extrudern dosiert werden. Weiterhin sind die Extrusionsbedingungen und die Extrudateigenschaften sowie die Eigenschaften der Dispersionen aufgeführt.

Die Versuche wurden auf 2 Extrudern der Fa. Werner ε Pfleiderer (Continua 37) mit geringfügig unterschiedlicher Länge durchgeführt. Die Schneckenkonfigurationen waren bei beiden Extrudern vergleichbar. Die erste Hälfte der Schnecke enthielt neben normalen Förderelementen 2 linksgängige Rückmischelemente a 10 mm Länge. Der 2. Teil der Schneckenkonfiguration enthielt neben normalen Förderelementen 2 Knetelemente a 40 mm Länge. Die letzten 4 D der Schnecken waren aus Förderelementen mit erhöhter Steigung aufgebaut, um vor der Lochplatte höhere Drücke zu erzeugen. Gleichzeitig bestand an dieser Stelle die Möglichkeit zur Entgasung.

Die Drehzahl betrug bei allen Versuchen 160 UpM, und die Verweilzeit lag zwischen 40 sec und 5 min. Die Dispersionen der Wormalit-Typen PM 4239, PM 4739, PM 4770 und VN 4405 sind Handelsprodukte der Fa. Cordes & Co GmbH (Porta Westfalica) und Mowilith DM 155 ist eine Poly(vinylacetat-co-ethylen-co-acrylsäurederivat)-dispersion der Fa. Hoechst (Frankfurt). Alle eingesetzten Polymerdispersionen haben in der Handelsform einen Feststoffgehalt von 45 - 60 %. Teilweise wurden diese Dispersionen, je nach Beispiel, mit Wasser und/oder Glycerin gemischt.

### Beispiel 2

Die prinzipielle Vorgehensweise entspricht der aus Beispiel 1. Die Abänderungen sind aus der folgenden Zusammenstellung ersichtlich.

System Hydroxypropylstärke (DS = 0,1)/Poly(vinylacetat-co-di-butylmaleinat)dispersion

### a. Die Extrudatherstellung

| | |
|---|---|
| Feststoff | Hydroxypropylstärke (DS = 0,1; Emcol HE/E; Fa. Emsland Stärke GmbH, Emlichheim) |
| Feststoffdosierung | 6,5 kg/h |
| Verwendete Dispersion | Poly(vinylacetat-co-di-butyl-maleinat)dispersion (Wormalit PM 4739; Feststoffgehalt: 53 % Schutzkolloid: Stärkeether Fa. Cordes & Co GmbH (Porta Westfalica)) |
| Zusammensetzung der füssigen Phase | 50 % P(VAc-co-DBM)/50 % Wasser |
| Flüssigdosierung | 6,5 kg/h |
| Ausgangszusammensetzung | 40 % Hydroxyproylstärke |
| | 25 % P(VAc-co-DBM) |
| | 35 % Wasser |
| Extruder | Werner & Pfleiderer Continua 37 (26 D) |
| Heizmediumtemperatur | |
| 1. Hälfte | 100°C |
| 2. Hälfte | 100°C |
| Temperatur im Extruder | 101 - 102°C |
| Austrittstemperatur | 110 - 113°C |
| Drehzahl | 160 UpM |
| Drehmoment | 29 - 31 % |
| Verweilzeit | 40 sec - 4 min |
| Aussehen | weißlich, trüb, blasig, glatte, glänzende Oberfläche |
| Mechanische Eigenschaften | flexibel, leicht zu zerreißen |
| Klebrigkeit | nein |

### b. Dispersionseigenschaften

| | |
|---|---|
| Feststoffgehalt | 40 % |
| Stärkeanteil am Feststoff | 61,5 % |
| Aussehen | fast weiß, fließfähig, homogen, stippenfrei |
| Klebtest nach 1 h | Papierriß |
| Lagerstabilität | länger als 1 Monat |

### Beispiel 3

Die prinzipielle Vorgehensweise entspricht der aus Beispiel 1. Die Abänderungen sind aus der folgenden Zusammenstellung ersichtlich.

System Hydroxypropylstärke (DS = 0,1)/Poly(vinylacetat-co-di-butylmaleinat)dispersion

### a. Die Extrudatherstellung

| | |
|---|---|
| Feststoff | Hydroxypropylstärke (DS = 0,1; Emcol HE/E; Fa. Emsland-Stärke GmbH, Emlichheim) |
| Feststoffdosierung | 10 kg/h |
| Verwendete Dispersion | Poly(vinylacetat-co-dibutyl-maieinat)dispersion (Wormalit PM 4739; Feststoffgehalt: 53 % |
| | Schutzkolloid: Stärkeether Fa. Cordes & Co GmbH (Porta Westfalica)) |
| Flüssigdosierung | 3 kg/h |
| Ausgangszusammensetzung | 61,5 % Hydroxyproylstärke 11,5 % P(VAc-co-DBM) 27 % Wasser |
| Extruder | Werner & Pfleiderer Continua 37 (26 D) |
| Heizmediumtemperatur | |
| 1. Hälfte | 70°C |
| 2. Hälfte | 73°C |
| Temperatur im Extruder | 103 - 104°C |
| Austrittstemperatur | 125 - 130°C |
| Drehzahl | 160 UpM |
| Drehmoment | 59 - 60°C |
| Verweilzeit | 40 sec - 4 min |
| Aussehen des Extrudates | weißlich, trüb, blasig, glatte, glänzende Oberfläche |
| Mechanische Eigenschaften | flexibel, leicht zu zerreißen |
| Klebrigkeit | nein |

### b. Dispersionseigenschaften

| | |
|---|---|
| Feststoffgehalt | 40 % Gew.-% |
| Stärkeanteil an Feststoff | 84,3 % Gew.-% |
| Aussehen | fast weiß, fließfähig, homogen, stippenfrei |
| Klebtest nach 1 h | Papierriß |
| Lagerstabilität | länger als 1 Monat |

### Beispiel 4

Die prinzipielle Vorgehensweise entspricht der aus Beispiel 1. Die Abänderungen sind aus der folgenden Zusammenstellung ersichtlich.

System Kartoffelstärke/dextrinverträgliche Polyvinylacetatdispersion

### a. Die Extrudatherstellung

| | |
|---|---|
| Feststoff | Kartoffelstärke |
| Feststoffdosierung | 10,4 kg/h |
| Flüssige Komponente | dextrinverträgliche PVAc-Dispersion (Wormalit VN 4405 Feststoffgehalt: 60 % Schutzkolloid: Stärkeether Fa. Cordes & Co GmbH (Porta Westfalica)) |
| Flüssigdosierung | 2,6 kg/h |
| Ausgangszusammensetzung | 64 % Kartoffelstärke |
| | 12 % PVAc |
| | 24 % Wasser |
| Extruder | Werner & Pfleiderer Continua 37 (30 D) |
| Heizmediumtemperatur | |
| 1. Hälfte | 80°C |
| 2. Hälfte | 110°C |
| Temperatur im Extruder | 100°C |
| Austrittstemperatur | 125 - 130°C |
| Drehzahl | 160 UpM |
| Drehmoment | 70°C |
| Verweilzeit | 50 sec - 4 min |
| Aussehen | gräulich, trüb, blasig, |
| Mechanische Eigenschaften | wenig flexibel, zerbrechlich |
| Klebrigkeit | nein |

### b. Dispersionseigenschaften

| | |
|---|---|
| Feststoffgehalt | 15 % Gew.-% |
| Stärkeanteil an Feststoff | 84,2 % Gew.-% |
| Aussehen | fast weiß, fließfähig, homogen, stippenfrei |
| Klebtest nach 1h | Papierriß |
| Lagerstabilität | länger als 1 Monat |

### Beispiele 5 bis 24

Weitere Beispiele zur Herstellung stärkehaltiger Dispersionsklebstoffe duch Coextrusion von Stärken mit wäßrigen Polymerdispersionen sind in tabellarischer Zusammenstellung im nachfolgenden angegeben. Die Beispiele 5 bis 18 arbeiten mit Kartoffelstärke, die Beispiele 19 bis 24 setzen eine Hydroxypropylstärke (HPS) mit einem DS von 0,1 ein. Zur Identifizierung der im Rahmen der Flüssigdosierung eingesetzten wäßrigen Polymerdispersionen vergleiche die zuvor gemachten Angaben.

| **Rezeptur** | | | | | | | |
|---|---|---|---|---|---|---|---|
| | Festdosierung | | Flüssigdosierung | | | | |
| | | | | | Zusammensetzung | | |
| Beispiel | Stärkeart | Menge kg/h | Menge kg/h | Bezeichnung der Dispersion | Synth. Polymer Gew.-% | Glycerin Gew.-% | Wasser Gew.-% |
| 5 | K-Stärke | 2,6 | 6,0 | VN 4405 | 56,8 | 0 | 43,2 |
| 6 | K-Stärke | 3,0 | 4,4 | VN 4405 | 58,5 | 0 | 41,5 |
| 7 | K-Stärke | 3,9 | 2,6 | VN 4405 | 60,0 | 0 | 40,0 |
| 8 | K-Stärke | 10,4 | 2,6 | VN 4405 | 60,0 | 0 | 40,0 |
| 9 | K-Stärke | 2,3 | 5,4 | PM 4239 | 50,4 | 0 | 49,6 |
| 10 | K-Stärke | 2,2 | 2,2 | PM 4239 | 52,5 | 0 | 47,5 |
| 11 | K-Stärke | 5,1 | 2,2 | PM 4239 | 52,5 | 0 | 47,5 |
| 12 | K-Stärke | 6,6 | 2,2 | PM 4239 | 52,5 | 0 | 47,5 |
| 13 | K-Stärke | 3,0 | 5,8 | DM 155 | 54,0 | 0 | 46,0 |
| 14 | K-Stärke | 13,5 | 5,8 | DM 155 | 54,0 | 0 | 46,0 |
| 15 | K-Stärke | 14,5 | 5,8 | DM 155 | 54,0 | 0 | 46,0 |
| 16 | K-Stärke | 15,5 | 5,8 | DM 155 | 54,0 | 0 | 46,0 |
| 17 | K-Stärke | 4,9 | 9,5 | DM 155 | 37,0 | 31,5 | 31,5 |
| 18 | K-Stärke | 16,2 | 9,5 | DM 155 | 37,0 | 31,5 | 31,5 |
| 19 | HPS | 12,0 | 3,0 | VN 4405 | 60,0 | 0 | 40,0 |
| 20 | HPS | 3,0 | 12,0 | VN 4405 | 60,0 | 0 | 40,0 |
| 21 | HPS | 3,5 | 1,5 | PM 4739 | 50,0 | 0 | 50,0 |
| 22 | HPS | 2,1 | 4,9 | PM 4739 | 50,0 | 0 | 50,0 |
| 23 | HPS | 2,0 | 8,0 | PM 4739 | 50,0 | 0 | 50,0 |
| 24 | HPS | 12,0 | 3,0 | VN 4405 | 60,0 | 0 | 40,0 |

| **Rohstoffzusammensetzung** | | | | |
|---|---|---|---|---|
| Beispiel | Stärke Gew.-% | Synthet. Polymer Gew.-% | Glycerin Gew.-% | theoreth. Wassergehalt Gew.-% |
| 5 | 24,0 | 42,0 | 0 | 34,0 |
| 6 | 32,0 | 36,0 | 0 | 32,0 |
| 7 | 48,0 | 24,0 | 0 | 28,0 |
| 8 | 64,0 | 12,0 | 0 | 24,0 |
| 9 | 24,0 | 38,5 | 0 | 37,5 |
| 10 | 40,0 | 27,5 | 0 | 32,5 |
| 11 | 56,0 | 16,5 | 0 | 27,5 |
| 12 | 60,0 | 13,8 | 0 | 26,7 |
| 13 | 27,3 | 35,6 | 0 | 37,2 |
| 14 | 56,0 | 16,2 | 0 | 27,8 |
| 15 | 60,0 | 13,5 | 0 | 26,5 |
| 16 | 64,0 | 10,8 | 0 | 25,2 |
| 17 | 27,2 | 24,4 | 20,8 | 27,6 |
| 18 | 50,4 | 13,7 | 11,6 | 24,2 |
| 19 | 64,0 | 12,0 | 0 | 24,0 |
| 20 | 16,0 | 48,0 | 0 | 36,0 |
| 21 | 56,0 | 15,0 | 0 | 29,0 |
| 22 | 24,0 | 35,0 | 0 | 41,0 |
| 23 | 16,0 | 40,0 | 0 | 44,0 |
| 24 | 64,0 | 12,0 | 0 | 24,0 |

| Extrusionsparameter | | | | | |
|---|---|---|---|---|---|
| Beispiel | Heizmediumtemp. 1.Hälfte °C | Heizmediumtemp. 2.Hälfte °C | Extruderlänge | Drehmoment | Austrittstemp. (Extruder-Messung) °C |
| 5 | 80 | 95 | 30 D | 18 | 65 |
| 6 | 80 | 95 | 30 D | 24 | 65 |
| 7 | 80 | 100 | 30 D | 40 | 85 |
| 8 | 80 | 110 | 30 D | 70 | 100 |
| 9 | 70 | 86 | 30 D | 18 | 55 |
| 10 | 70 | 90 | 30 D | 38 | 85 |
| 11 | 73 | 90 | 30 D | 62 | 85 |
| 12 | 73 | 90 | 30 D | 75 | 100 |
| 13 | 62 | 84 | 30 D | 18 | 60 |
| 14 | 62 | 87 | 30 D | 64 | 85 |
| 15 | 62 | 87 | 30 D | 70 | 90 |
| 16 | 62 | 87 | 30 D | 85 | 90 |
| 17 | 70 | 110 | 30 D | 14 | 80 |
| 18 | 70 | 110 | 30 D | 50 | 65 |
| 19 | 120 | 120 | 26 D | 72 | 117 |
| 20 | 130 | 130 | 26 D | 27 | 110 |
| 21 | 80 | 140 | 30 D | 24 | 105 |
| 22 | 80 | 140 | 30 D | 14 | 100 |
| 23 | 80 | 140 | 30 D | 10 | 100 |
| 24 | 80 | 80 | 26 D | 60 | 104 |

| Aussehen/Eigenschaften des Extrudates | | | |
|---|---|---|---|
| Beispiel | Färbe | Flexibilität | Klebrigkeit |
| 5 | weiß beige | weich | gering |
| 6 | weiß | flexibel | nein |
| 7 | weiß beige | flexibel | nein |
| 8 | gräulich | spröde | nein |
| 9 | weiß | flexibel | nein |
| 10 | weiß | flexibel | nein |
| 11 | gräulich | mittel | nein |
| 12 | weiß | flexibel | nein |
| 13 | weiß beige | flexibel | nein |
| 14 | beige | flexibel | nein |
| 15 | beige | flexibel | nein |
| 16 | beige | flexibel | nein |
| 17 | weiß beige | flexibel | ja |
| 18 | weiß | mittel | nein |
| 19 | gräulich | spröde | nein |
| 20 | weiß | weich | ja |
| 21 | gräulich | flexibel | nein |
| 22 | weiß | weich | gering |
| 23 | weiß | weich | ja |
| 24 | geblich | flexibel | nein |

| Aussehen/Eigenschaften der Re-Dispersionen | | | | | | | |
|---|---|---|---|---|---|---|---|
| Beispiel | Fest stoffgehalt % | Stärkeanteil am Feststoff % | direkt nach der Herstellung | | | nach 1 Woche | |
| | | | Klebtest nach 1 h | Fließfähigkeit | Homogenität | Fließfähigkeit | Homogenität |
| 5 | 15,0 | 36,4 | Pap.riß | gut | gut | gut | Stippen |
| 6 | 15,0 | 47,1 | Pap.riß | mittel | gut | schlecht | gut |
| 7 | 15,0 | 66,7 | Pap.riß | gut | gut | schlecht | schlecht |
| 8 | 15,0 | 84,2 | Pap.riß | gut | gut | gut | gut |
| 9 | 15,0 | 38,4 | Pap.riß | gut | mittel | gut | mittel |
| 10 | 15,0 | 59,3 | Pap.riß | schlecht | schlecht | keine | inhom. |
| 11 | 15,0 | 77,2 | Pap.riß | gut | mittel | gut | mittel |
| 12 | 15,0 | 81,3 | Pap.riß | gut | gut | gut | Stippen |
| 13 | 15,0 | 43,4 | Pap.riß | gut | gut | schlecht | gut |
| 14 | 13,4 | 77,6 | Pap.riß | schlecht | schlecht | schlecht | schlecht |
| 15 | 15,0 | 81,6 | Pap.riß | gut | gut | schlecht | gut |
| 16 | 16,5 | 85,6 | Pap.riß | gut | gut | gut | gut |
| 17 | 17,2 | 52,7 | Pap.riß | gut | gut | gut | schlecht |
| 18 | 14,4 | 78,6 | Pap.riß | gut | gut | gut | schlecht |
| 19 | 40,0 | 84,2 | Pap.riß | gut | gut | gut | gut |
| 20 | 40,0 | 25,0 | Pap.riß | gut | gut | gut | gut |
| 21 | 40,0 | 78,9 | Pap.riß | gut | gut | gut | gut |
| 22 | 40,0 | 40,7 | Pap.riß | gut | gut | gut | gut |
| 23 | 40,0 | 28,6 | Pap.riß | gut | gut | gut | gut |
| 24 | 20,0 | 84,2 | Pap.riß | gut | gut | gut | gut |

### Beispiele 25 bis 36

Die nachfolgenden Beispiele 25 bis 36 setzen gut wasserlösliche Stärkederivate auf Basis von Hydroxypropylstärke (HPS) und/oder Hydroxyethylstärke (HES) ein. Es werden dabei sowohl entsprechende Stärkederivate auf Basis Kartoffelstärke (K) als auch solche auf Basis Weizenstärke (W) verwendet.

Die im Rahmen dieser Beispiele eingesetzten Stärkearten sind wie folgt gekennzeichnet:
- HPS K1250:: Hydroxypropylstärke auf Kartoffelbasis mit einem MS von 1,1
- HPS W1000:: Hydroxypropylstärke auf Weizenbasis mit einem MS von 0,9
- HES K1250:: Hydroxyethylstärke auf Kartoffelbasis mit einem MS von 1,1
- HE/HPS K1000/1000:: Hydroxyethyl/Hydroxypropylstärke auf Kartoffelbasis mit einem jeweilen MS von 0,9/0,9
- HPS K500:: Hydroxypropylstärke auf Kartoffelbasis mit einem MS von 0,45

Die in diesen Beispielen 25 bis 36 eingesetzte wäßrige Dispersion des synthetischen Polymeren (Flüssigdosierung) ist die zuvor beschriebene Poly(vinylacetat-co-di-butylmaleinat)dispersion mit der Handelsbezeichnung "Wormalit PM 4739" der Firma Cordes & Co. GmbH.

Die Beispiele 35 und 36 verwenden einen geringen Zusatz von Glykolsäure zur Neutralisation des Gehaltes am freien Alkali in den hier eingesetzten Hydroxyalkylstärkederivaten.

Die primär anfallenden Extrudate werden in einem mechanischen Labormischgerät entweder unter Stickstoffkühlung (Mahlung: Mixer, N2) oder bei Raumtemperatur (Mixer, RT) gemahlen. Die gemahlenen Extrudate werden analog Beispiel 1 - jetzt aber bei Raumtemperatur dispergiert.

Die jeweils eingesetzen Mischungsverhältnisse, die Verarbeitungsbedingungen, Angaben über die Beschaffenheit der gewonnenen Extrudate und der daraus hergestellten Dispersionen beziehungsweise Klebstoffe sind in der nachfolgenden tabellarischen Zusammenfassung enthalten.

| | Rezeptur | | | Rohstoffzusammensetzung | | | |
|---|---|---|---|---|---|---|---|
| Beispiel | Festdosierung | | Flüssigdosierung Menge kg/h | Stärke Gew.-% | Synth. Polymer Gew.-% | Glycolsäure Gew.-% | theoret. Wassergehalt Gew.-% |
| | Stärke-art | Menge kg/h | | | | | |
| 25 | HPS K1250 | 2,26 | 5,47 | 27,3 | 37,5 | - | 35,2 |
| 26 | HPS K1250 | 2,26 | 5,47 | 27,3 | 37,5 | - | 35,2 |
| 27 | HPS K1250 | 4,75 | 2,79 | 58,9 | 19,6 | - | 21,5 |
| 28 | HPS K1250 | 6,80 | 1,33 | 78,2 | 8,7 | - | 13,1 |
| 29 | HPS W1000 | 4,29 | 1,71 | 68,8 | 15,1 | - | 16,1 |
| 30 | HPS W1000 | 2,26 | 3,74 | 36,2 | 33,0 | - | 30,8 |
| 31 | HES K1250 | 2,36 | 5,90 | 27,4 | 37,9 | - | 34,7 |
| 32 | HES K1250 | 4,77 | 2,88 | 59,9 | 20,0 | - | 20,2 |
| 33 | HES K1250 | 4,77 | 0,96 | 79,9 | 8,9 | - | 11,2 |
| 34 | HE/HPS | 2,10 | 4,90 | 27,0 | 37,1 | - | 35,9 |
| | K1000/1000 | | | | | | |
| 35 | HPS K500 | 3,89 | 2,27 | 57,7 | 19,5 | 2,0 | 20,7 |
| 36 | HPS K500 | 5,17 | 0,99 | 76,7 | 8,5 | 2,7 | 12,1 |

| **Extrudatzusammensetzung** | | | | | | |
|---|---|---|---|---|---|---|
| Beispiel | Wasserverlust Gew.-% | Ist-Feststoffanteil Gew.-% | Stärke Gew.-% | Synth. Polymer Gew.-% | Glycolsäure Gew.-% | theoreth. Wasser gehalt Gew.-% |
| 25 | 9,5 | 71,6 | 30,2 | 41,4 | - | 28,4 |
| 26 | 9,5 | 71,6 | 30,2 | 41,4 | - | 28,4 |
| 27 | 1,6 | 79,8 | 59,9 | 19,9 | - | 20,2 |
| 28 | 0,7 | 87,5 | 78,8 | 8,8 | - | 12,5 |
| | | | | | | (4,7) |
| 29 | 10,2 | 93,2 | 76,4 | 16,8 | - | 6,8 |
| 30 | 13,4 | 79,9 | 41,8 | 38,1 | - | 20,1 |
| 31 | 11,0 | 73,4 | 30,8 | 42,6 | - | 26,6 |
| 32 | 6,6 | 85,5 | 64,1 | 21,4 | - | 14,6 |
| 33 | 10,5 | 99,2 | 89,3 | 9,9 | - | 0,8 |
| 34 | 11,3 | 72,3 | 30,5 | 41,8 | - | 27,7 |
| 35 | 13,1 | 91,3 | 66,4 | 22,4 | 2,3 | 8,7 |
| 36 | 7,3 | 94,8 | 82,8 | 9,2 | 2,9 | 5,2 |

| **Extrusionsparameter** | | | | | |
|---|---|---|---|---|---|
| Beispiel | Heizmediumtemp. 1/2 °C | Drehzahl 1/min | Drehmoment % | Korr.Austrittstemp. (Extruder-Messung) °C | Temp. (Handmeßgerät) °C |
| 25 | 80/140 | 100 | 14 | 106-110 | 111 |
| 26 | 80/140 | 100 | 14 | 106-110 | 111 |
| 27 | 80/140 | 100 | 30 | 119-123 | n.b. |
| 28 | 80/140 | 100 | 20 | 132-138 | 135-139 |
| 29 | 80/140 | 100 | 13 | 111 | n.b. |
| 30 | 80/140 | 100 | 33 | 121 | n.b. |
| 31 | 80/140 | 100 | 17 | 85-88 f | 102 |
| 32 | 80/140 | 100 | 35 | 119-121 | 107-111 |
| 33 | 80/140 | 100 | 18-24 | 97-98 f | n.b. |
| 34 | 80/140 | 100 | 11 | 105-107 | 107-108 |
| 35 | 80/140 | 350 | 18-20 | 124-128 | 127-134 |
| 36 | 80/140 | 350 | 14-16 | 144-146 | nicht |
| | | | | | messbar |

| | | | | | |
|---|---|---|---|---|---|
| n.b. = nicht bestimmt | | | | | |

| Aussehen/Eigenschaften des Extrudates | | | | | | |
|---|---|---|---|---|---|---|
| Beispiel | Farbe | Transparenz | Blasenbildung | Homogenität | Flexibilität | Klebrigkeit |
| 25 | beige | mittel | stark | gut | sehr weich | ja |
| 26 | beige | mittel | stark | gut | sehr weich | ja |
| 27 | braun | mittel | kaum | sehr gut | weich | gering |
| 28 | beige | gering | sehr stark | gut | brüchig | nein |
| 29 | beige | gut | sehr stark | sehr gut | sehr weich | nein |
| 30 | braun | schlecht | sehr stark | gut | ja | nein |
| 31 | dunkelbraun | gut | kaum | sehr gut | sehr weich | ja |
| 32 | gelblichbraun | kaum | stark | gut | gering | gering |
| 33 | weißbeige | nein | nein | schlecht | gering | gering |
| 34 | beige | gut | kaum | sehr gut | weich | stark |
| 35 | grau | schlecht | sehr stark | gut | gut | nein |
| 36 | weiß | schlecht | sehr stark | verschäumt | brüchig | nein |

| Aussehen/Eigenschaften der Dispersionen | | | | | |
|---|---|---|---|---|---|
| Beispiel | Mahlung | Feststoffgehalt % | Stärkeanteil am Feststoff *) % | Dispergierzeit | |
| | | | | äußerlich homogen min | Stippenfrei min |
| 25 | Mixer, N2 | 30 | 42,1 | 11 | 53 |
| 26 | Mixer, N2 | 30 | 42,1 | 60 | 80 |
| 27 | Mixer, N2 | 30 | 75,0 | 4 | 16 |
| 28 | Mixer, RT | 30 | 90,0 | 5 | 30 |
| 29 | Mixer, N2 | 30 | 42,0 | 48 | 210 |
| 30 | Mixer, N2 | 30 | 75,0 | 14 | 64 |
| 31 | Mixer, N2 | 30 | 42,0 | 127 | 157 |
| 32 | Mixer, N2 | 30 | 75,0 | 21 | 37 |
| 33 | Mixer, N2 | 30 | 90,0 | 81 | 91 |
| 34 | Mixer, N2 | 30 | 42,1 | 27 | (64) |
| 35 | Mixer, N2 | 30 | 74,7 | 45 | 160 |
| 36 | Mixer, RT | 30 | 90,0 | 12 | 97 |

| | | | | | |
|---|---|---|---|---|---|
| *) nur Stärke und synt. Polymer berücksichtigt | | | | | |

| Fortsetzung: Aussehen/Eigenschaften der Dispersionen | | | | | | | |
|---|---|---|---|---|---|---|---|
| Beispiel | Dispergiertemperatur °C | pH | Homogenigenität | Fadenziehen | Viskosität 1) | | |
| | | | | | mPas | Temp. °C | nach Herst. |
| 25 | RT | | sehr gut | ja | 15.800 | RT | direkt |
| 26 | RT | | sehr gut | ja | 20.400 | RT | 1 Woche |
| 27 | 90 | | sehr gut | ja | 28.920 | RT | 3 Wochen |
| 28 | RT | | sehr gut | ja | 50.000 | RT | 3 Wochen |
| 29 | RT | 9,8 | mittel | nein | 16.560 | RT | direkt |
| 30 | RT | 11,8 | sehr gut | ja | 30.000 | RT | direkt |
| 31 | RT | | sehr gut | ja | 4.700 2) | RT | direkt |
| 32 | RT | 10,8 | sehr gut | ja | 42.000 | RT | direkt |
| 33 | RT | | sehr gut | ja | 34.000 | RT | direkt |
| 34 | RT | 9,4 | sehr gut | ja | 10.800 | RT | direkt |
| 35 | RT | 5,2 | sehr gut | ja | 12.000 | RT | direkt |
| 36 | RT | 6,4 | sehr gut | ja | 18.000 | RT | direkt |

| | | | | | | | |
|---|---|---|---|---|---|---|---|
| 1) Brookfield; Spindel 7; höchste Umdrehung | | | | | | | |
| 2) Spindel 6 | | | | | | | |
| RT = Raumtemperatur | | | | | | | |

Die nachfolgenden Beispiele 37 bis 43 modifizieren die Lehre der Erfindung wie folgt:

Als Stärkeeinsatzmaterial werden Hydroxypropylstärken auf Kartoffelbasis beziehungsweise Weizenbasis jeweils mit einem MS von 1,1 eingesetzt.

Die bisher noch nicht identifizierten Kennziffern aus der Bezeichnung der im Rahmen der Flüssigdosierung eingesetzten Dispersionen haben die nachfolgende Bedeutung:
- PM 4131:: Polymerdispersion wie PM 4739, jedoch unter Einsatz von Polyvinylalkohol als Schutzkolloid
- Prim 4990:: Handelsprodukt "Primacor 4990" der Firma Dow-Chem.Corp., Polymerdispersion auf Basis eines Ethylen-co-acrylsäure-polymeren
- Synt. 9040 und Synt. 9050:: Wäßrige Dispersionen von Carboxylgruppen enthaltenden Styrol/Butadein-Copolymeren, Handelsprodukte der Fa. Synthomer Chemie, Hanau

Die Extrudatherstellung erfolgt analog den bisherigen Angaben der Beispiele, wobei in den nachfolgenden Tabellen die jeweils eingesetzten Parameter zusammengefaßt sind. Durchweg wird in diesen Beispielen 37 bis 43 im Rahmen der Festdosierung eine beschränkte Menge an Glykolsäure - wiederum zur Neutralisation des Alkaligehaltes der eingesetzten Hydroxyalkylstärken - mitverwendet.

Die Extrudate werden unter Stickstoffkühlung in einem Labormixer gemahlen, anschließend wird das Pulver durch Siebung fraktioniert und die Fraktion mit der Korngröße 0,2 bis 0,4 mm für die nachfolgenden Dispergierversuche eingesetzt. Im Gegensatz zu den vorherigen Beispielen erfolgt hier die Dispergierung durch Einrühren des Pulvers in Wasser per Hand und bei Raumtemperatur.

Wie in den vorherigen Beispielen sind die Kenndaten zur Herstellung und zur Beurteilung des Extrudates und der daraus gewonnenen Klebstoffdispersionen in den nachfolgenden Tabellen zusammengefaßt.

| **Rezuptur** | | | | | |
|---|---|---|---|---|---|
| **Festdosierung** | | | | | |
| Beispiel | Stärkeart | Stärke % | Wasser % | Glycolsäure % | Menge kg/h |
| 37 | HPS K1250 | 94,1 | 3,3 | 2,6 | 3,83 |
| 38 | HPS K1250 | 94,1 | 3,3 | 2,6 | 3,83 |
| 39 | HPS W1250 | 93,4 | 3,7 | 2,8 | 3,85 |
| 40 | HPS K1250 | 94,4 | 3,0 | 2,7 | 4,03 |
| 41 | HPS K1250 | 94,3 | 3,1 | 2,7 | 3,23 |
| 42 | HPS K1250 | 94,3 | 2,8 | 2,9 | 3,71 |
| 43 | HPS K1250 | 92,7 | 4,8 | 2,5 | 3,18 |

| Fortsetzung **Rezuptur** | | | | |
|---|---|---|---|---|
| **Flüssigdosierung** | | | | |
| Beispiel | Menge kg/h | Bezeichnung der Dispersion | Zusammensetzung | |
| | | | Synt. Polymer Gew.-% | Wasser Gew.-% |
| 37 | 2,26 | PM 4739 | 53,0 | 47,0 |
| 38 | 2,26 | PM 4131 | 53,0 | 47,0 |
| 39 | 2,26 | PM 4131 | 53,0 | 47,0 |
| 40 | 2,08 | VN 4405 | 60,0 | 40,0 |
| 41 | 2,86 | Prim 4990 | 35,0 | 65,0 |
| 42 | 2,29 | Synt 9050 | 50,0 | 50,0 |
| 43 | 1,82 | Synt 9040 | 53,0 | 47,0 |

| **Rohstoffzusammensetzung** | | | | |
|---|---|---|---|---|
| Beispiel | Stärke Gew.-% | Synthet. Poymer Gew.-% | Glycolsäure Gew.-% | theoreth. Wassergehalt Gew.-% |
| 37 | 59,2 | 19,7 | 1,6 | 19,5 |
| 38 | 59,2 | 19,7 | 1,6 | 19,5 |
| 39 | 58,8 | 19,6 | 1,7 | 19,7 |
| 40 | 62,6 | 20,4 | 1,8 | 15,6 |
| 41 | 50,0 | 16,4 | 1,4 | 32,2 |
| 42 | 58,3 | 19,1 | 1,8 | 20,8 |
| 43 | 58,9 | 19,3 | 1,6 | 20,1 |

| **Extrudatzusammensetzung** | | | | | | |
|---|---|---|---|---|---|---|
| Beispiel | Wasserverlust Gew.-% | Ist-Feststoffananteil Gew.-% | Stärke Gew.-% | Synthet. Polymer Gew.-% | Glycolsäure Gew.-% | teoreth. Wassergehalt Gew.-% |
| 37 | 15,0 | 94,7 | 69,6 | 23,1 | 1,9 | 5,3 |
| 38 | 11,6 | 91,0 | 66,9 | 22,2 | 1,8 | 9,0 |
| 39 | 17,5 | 97,3 | 71,3 | 23,8 | 2,1 | 2,7 |
| 40 | 14,7 | 98,9 | 73,0 | 23,9 | 2,1 | 1,1 |
| 41 | 23,3 | 88,4 | 65,2 | 21,4 | 1,8 | 11,6 |
| 42 | 19,4 | 98,2 | 72,3 | 23,7 | 2,2 | 1,8 |
| 43 | 17,7 | 97,0 | 71,6 | 23,4 | 2,0 | 3,0 |

| **Extrusionsparameter** | | | | | | | |
|---|---|---|---|---|---|---|---|
| Beispiel | Heizmediumtemp. 1.Hälfte °C | Heizmediumtemp. 2.Hälfte °C | Drehzahl 1/min | Extruderlänge | Drehmoment % | korr. Austrittstemp. *) °C | Temp. (Handmeßgerät) °C |
| 37 | 80 | 140 | 300 | 30 D | 22 | 130-133 | n.b. |
| 38 | 80 | 140 | 300 | 30 D | 23 | 134-142 | n.b. |
| 39 | 80 | 140 | 300 | 30 D | 24 | 120-128 | n.b. |
| 40 | 80 | 140 | 300 | 30 D | 30 | 133-134 | n.b. |
| 41 | 80 | 140 | 300 | 30 D | 34-36 | 133-136 | n.b. |
| 42 | 80 | 140 | 100 | 30 D | n.b. | 114-115 | 109-111 |
| 43 | 80 | 140 | 100 | 30 D | n.b. | 132-134 | 132-146 |

| | | | | | | | |
|---|---|---|---|---|---|---|---|
| n.b. = nicht bestimmt | | | | | | | |
| *) = Extrudermessung | | | | | | | |

| Aussehen/Eigenschaften des Extrudates | | | | | | |
|---|---|---|---|---|---|---|
| Beispiel | Farbe | Transparenz | Blasenbildung | Homogenität | Flexibilität | Klebrigkeit |
| 37 | weiß | gering | sehr stark | gut | mittel | nein |
| 38 | beige | gering | sehr stark | gut | mittel | nein |
| 39 | beige | gering | sehr stark | gut | gut | nein |
| 40 | weiß | gering | stark | gut | mittel | nein |
| 41 | beige | gut | stark | sehr gut | gut | nein |
| 42 | weißlich | nein | stark | gut | gering | nein |
| 43 | gräulich | gering | sehr stark | gut | gering | nein |
| 44 | grau | gering | gering | gut | spröde | nein |

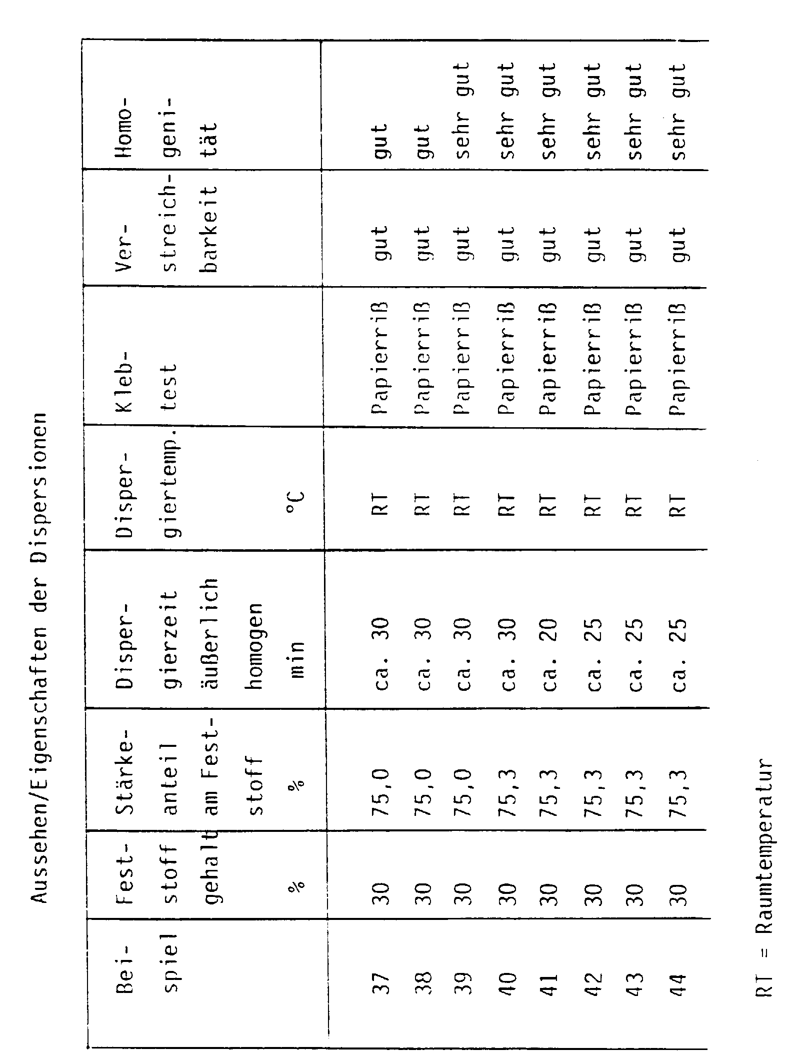

## Patentansprüche

1. Vereinfachtes Verfahren zur Herstellung von stärkehaltigen Dispersions-Klebstoffen in redispergierbarer Trockenform aus einer Mischung von wäßrigen Dispersionen synthetischer Polymerverbindungen mit Klebstoffcharakter und wasserhaltiger Stärke und/oder Stärkederivaten, dadurch gekennzeichnet, daß man die Stärke und/oder Stärkederivate in Form feinteiliger Feststoffe einsetzt und zunächst mit den wäßrigen Polymer-dispersionen und gewünschtenfalls weiteren niedermolekularen Plastifizierungsmitteln vermischt, diese Mehrstoffmischung bei Temperaturen von wenigstens 90 °C und erhöhten Drucken bei Verweilzeiten des Mehrstoffgemisches unter Arbeitsbedingungen von 0,5 bis 10 min bei gleichzeitigem weiteren intensiven Vermischen dem Stärkeaufschluß unter Bildung thermoplastisch verarbeitbarer Stärke unterwirft und gewünschtenfalls das homogenisierte Polymergemisch formgebend aus der Schmelzphase verarbeitet und/oder einer weiterführenden Zerkleinerung unterwirft.

2. Verfahren nach Anspruch 1, dadurch gekennzeichnet, daß man die Stärke oder Stärkederivate in Pulverform, vorzugsweise als rieselfähige Pulver mit Wassergehalten im Bereich von etwa 5 - 25 Gew.-% in das Verfahren einbringt.

3. Verfahren nach Ansprüchen 1 und 2, dadurch gekennzeichnet, daß man den Mischvorgang und den gleichzeitigen Stärkeaufschluß in geschlossenen Knetern oder vorzugsweise in Extrudern durchführt und dabei die Verweilzeit und die Verarbeitungsbedingungen derart aufeinander abstimmt, daß sowohl der thermoplastifizierende Stärkeaufschluß, sowie eine innige Vermischung der plastifizierten Polymerkomponenten sichergestellt sind.

4. Verfahren nach Ansprüchen 1 bis 3, dadurch gekennzeichnet, daß man mit Produkttemperaturen im Bereich von etwa 100 - 150°C, wenigstens in den Endphasen des Misch- und Stärkeaufschlußverfahrens arbeitet.

5. Verfahren nach Ansprüchen 1 bis 4, dadurch gekennzeichnet, daß man im kontinuierlichen Verfahren und unter dem sich bei der Verfahrenstemperatur im System einstellenden Eigendruck arbeitet.

6. Verfahren nach Ansprüchen 1 bis 5, dadurch gekennzeichnet, daß Mischung und Aufschluß in beheizten Extrudern durchgeführt werden, denen das Stärke- beziehungsweise Stärkederivat-pulver und die wäßrigen Polymer-dispersionen sowie gegebenenfalls die niedermolekularen Plastifizierungsmittel im Einzugsteil, zweckmäßigerweise getrennt voneinander, zugeführt werden, während die homogenisierte und aufgeschlossene Polymermischung gewünschtenfalls nach einer partiellen Abtreibung von Überschußwasser - als Extrudat gewonnen und gewünschtenfalls weiter zerkleinert wird.

7. Verfahren nach Ansprüchen 1 bis 6, dadurch gekennzeichnet, daß native Stärkepulver und/oder Stärkederivate mit erhöhter Wasserlöslichkeit, insbesondere Hydroxyalkylstärken, eingesetzt werden.

8. Verfahren nach Ansprüchen 1 bis 7, dadurch gekennzeichnet, daß die synthetischen Polymerverbindungen mit Klebstoffcharakter in Mengen unterhalb 50 Gew.-%, vorzugsweise in Mengen unterhalb 40 Gew.-% und insbesondere im Mengenbereich von etwa 10 - 30 Gew.-% - Gew.-% bezogen auf wasserfreies und/oder von Plastifizierungsmitteln freies Feststoffgemisch - eingesetzt werden.

9. Schmelzbare und/oder redispergierbare Klebstoffe in Trockenform auf Basis einer Kombination von Emulsions-(co)-polymeren mit Klebstoffcharakter und Stärke beziehungsweise Stärkederivaten, dadurch gekennzeichnet, daß sie die Emulsions-(co)-polymeren in inniger Abmischung mit thermoplastifizierend aufgeschlossener Stärke und/oder entsprechend aufgeschlossenen Stärkederivaten enthalten, wobei der Stärkeaufschluß bei erhöhten Drucken und Temperaturen von wenigstens 90 °C und unter Zusatz der wäßrigen Polymer-dispersionen und gewünschtenfalls zusätzlicher niedermolekularer Plastifizierungsmittel in Gegenwart der Emulsions-(co)-polymeren unter intensivem Vermischen des Mehrkomponentengemisches vorgenommen worden ist.

10. Klebstoffe nach Anspruch 9, dadurch gekennzeichnet, daß sie bei Raumtemperatur als Feststoffe vorliegen, die als Schmelzkleber oder in vorzugsweise feinteiliger Form als Redispergierpulver zur Herstellung von Dispersions-Klebstoffen, zum Beispiel in Pastenform, geeignet sind.

11. Klebstoffe nach Ansprüchen 9 und 10, dadurch gekennzeichnet, daß sie auf Basis thermoplastifizierend aufgeschlossener nativer Stärke und/oder entsprechend aufgeschlossener Stärkederivate mit erhöhter Wasserlöslichkeit aufgebaut sind, wobei als Stärkederivate insbesondere Hydroxyalkyl-substituierte Stärken vorliegen.

12. Klebstoffe nach Ansprüchen 9 bis 11, dadurch gekennzeichnet, daß der thermoplastifizierende Stärkeaufschluß in einem Arbeitsgang zusammen mit der homogenen Einmischung der wäßrigen Polymer-dispersionen und unter Einbindung des Wasser aus diesen Polymer-dispersionen in die Stärke beziehungsweise Stärkederivate stattgefunden hat.

13. Klebstoffe nach Ansprüchen 9 bis 12, dadurch gekennzeichnet, daß sie die thermoplastifizierend aufgeschlossene(n) Stärke beziehungsweise Stärkederivate in Abmischung mit thermoplastischen Polymerverbindungen mit Klebstoffcharakter, beispielsweise Polyvinylacetat, Polyvinylpropionat, Poly(meth)acrylat-harzen und/oder entsprechenden Co-polymeren und/oder zusammen mit Polyurethanharzen enthalten.

14. Klebstoffe nach Ansprüchen 9 bis 13, dadurch gekennzeichnet, daß sie die synthetischen Polymerverbindungen mit Klebstoffcharakter in Mengen unterhalb 50 Gew.-%, vorzugsweise in Mengen unterhalb 40 Gew.-% und insbesondere im Mengenbereich von etwa 10 - 30 Gew.-% - Gew.-% bezogen auf wasserfreies und/oder von Plastifizierungsmitteln freies Feststoffgemisch - und zum Rest die thermomechanisch aufgeschlossene(n) Stärken beziehungsweise Stärkederivate enthalten.

15. Klebstoffe nach Ansprüchen 9 bis 14, dadurch gekennzeichnet, daß sie Wasser und/oder niedermolekulare Plastifizierungsmittel in Mengen von wenigstens etwa 10 Gew.-%, vorzugsweise von wenigstens etwa 15 Gew.-% und insbesondere in Mengen von etwa 20 - 40 Gew.-% - bezogen auf Gesamtgemisch - enthalten, wobei Abmischungen bevorzugt sein können, die als Flüssigphase im wesentlichen oder ausschließlich Wasser und keine oder nur geringe Mengen an niedermolekularen Plastifizierungsmitteln aufweisen.

16. Klebstoffe nach Ansprüchen 9 bis 15, dadurch gekennzeichnet, daß sie als niedermolekulare Plastifizierungsmittel niedere polyfunktionelle Alkohole, insbesondere Glycerin, deren Ether, insbesondere Partialether, und/oder niedere Hydroxycarbonsäuren wie Glykolsäure und/oder Milchsäure enthalten.

## Claims

1. A simplified process for the production of starch-containing dispersion adhesives in redispersible dry form from a mixture of aqueous dispersions of synthetic polymer compounds of adhesive character and water-containing starch and/or starch derivatives, characterized in that the starch and/or starch derivatives is/are used in the form of fine-particle solids and is/are first mixed with the aqueous polymer dispersions and, if desired, other low molecular weight plasticizers, the resulting multicomponent mixture is subjected with intensive mixing to a starch digestion process for 0,5 to 10 mins. at temperatures of at least 90°C and under elevated pressure to form thermoplastically processable starch and, if desired, the homogenized polymer mixture is processed from the melt in moulding units and/or is subjected to further size reduction.

2. A process as claimed in claim 1, characterized In that the starch or starch derivatives are introduced into the process in powder form, preferably in the form of free-flowing powders with water contents of about 5 to 25% by weight.

3. A process as claimed in claims 1 and 2, characterized in that the mixing step and the simultaneous starch digestion step are carried out in closed kneaders or preferably in extruders and the residence time and processing conditions are co-ordinated with one another in such a way that both thermoplasticizing digestion of the starch and thorough mixing of the plasticized polymer components are achieved.

4. A process as claimed In claims 1 to 3, characterized in that product temperatures of around 100 to 150°C are applied, at least in the final phases of the mixing and starch digestion process.

5. A process as claimed in claims 1 to 4, characterized in that it is carried out continuously under the pressure spontaneously established in the system at the process temperature.

6. A process as claimed in claims 1 to 5, characterized in that mixing and digestion are carried out in heated extruders to which the starch or starch derivative powder and the aqueous polymer dispersions and optionally the low molecular weight plasticizers are delivered, preferably separately from one another, in the feed zone while the homogenized and digested polymer mixture is obtained as an extrudate. If desired, after the partial removal of excess water - and, if desired, is further size-reduced.

7. A process as claimed in claims 1 to 6, characterized In that native starch powder and/or starch derivatives highly soluble in water, more particularly hydroxyalkyl starches, are used.

8. A process as claimed in claims 1 to 7, characterized in that the synthetic polymer compounds of adhesive character are used in quantities below 50% by weight, preferably in quantities below 40% by weight and more preferably in quantities of about 10 to 30% by weight, based on the solids mixture free from water and/or plasticizers.

9. Meltable and/or redispersible adhesives in dry form based on a combination of emulsion (co)polymers of adhesive character and starch or starch derivatives, characterized in that they contain the emulsion (co)polymers in the form of an intimate mixture with thermoplasticizingly digested starch and/or correspondingly digested starch derivatives, the starch digestion process having been carried out with intensive mixing of the multicomponent mixture at elevated pressures and temperatures of at least 90°C in the presence of the aqueous polymer dispersions and, if desired, additional low molecular weight plasticizers and in the presence of the emulsion (co)polymers.

10. Adhesives as claimed in claim 9, characterized in that they are solid at room temperature and are suitable for use as hotmelt adhesives or - in preferably fine-particle form - as redispersion powders for the production of dispersion adhesives, for example in paste form.

11. Adhesives as claimed in claims 9 and 10, characterized in that they are based on thermoplasticizingly digested native starch and/or correspondingly digested starch derivatives highly soluble in water, the starch derivatives being in particular hydroxyalkyl-substituted starches.

12. Adhesives as claimed in claims 9 to 11, characterized in that the thermoplasticizing starch digestion process is carried out in a single step together with the homogeneous incorporation of the aqueous polymer dispersions, the water from these polymer dispersions being bound into the starch or starch derivatives.

13. Adhesives as claimed in claims 9 to 12, characterized in that they contain the thermoplasticizingly digested starch or starch derivatives in the form of a mixture with thermoplastic polymer compounds of adhesive character, for example polyvinyl acetate, polyvinyl propionate, poly(meth)acrylate resins and/or corresponding copolymers and/or together with polyurethane resins.

14. Adhesives as claimed in claims 9 to 13, characterized in that they contain the synthetic polymer compounds of adhesive character in quantities below 50% by weight, preferably in quantities below 40% by weight and more preferably in quantities of about 10 to 30% by weight, based on the solids mixture free from water and/or plasticizers, and for the rest the thermomechanically digested starch(es) or starch derivatives.

15. Adhesives as claimed in claims 9 to 14, characterized in that they contain water and/or low molecular weight plasticizers in quantities of at least about 10% by weight, preferably in quantities of at least about 15% by weight and more preferably in quantities of about 20 to 40% by weight, based on the mixture as a whole, mixtures essentially or exclusively containing water as their liquid phase and little or no low molecular weight plasticizers being preferred.

16. Adhesives as claimed in claims 9 to 15, characterized in that they contain lower polyhydric alcohols, more particularly glycerol, ethers, particularly partial ethers, thereof and/or lower hydroxycarboxylic acids, such as glycolic acid and/or lactic acid, as the low molecular weight plasticizers.

## Revendications

1. Procédé simplifié de fabrication de produits adhésifs en dispersion contenant de l'amidon, sous forme sèche pouvant se redisperser à base d'un mélange de dispersions aqueuses de composés polymères synthétiques ayant un caractère de produit adhésif et d'amidon contenant de l'eau et/ou des dérivés d'amidon,
caractérisé en ce qu'
on met en oeuvre l'amidon et/ou les dérivés d'amidon sous forme de matière solide finement divisée, on mélange en premier lieu avec la dispersion aqueuse de polymère et si désiré avec d'autres agents de plastification à bas poids moléculaire, soumet ce mélange de plusieurs substances à des températures d'au moins 90°C et à des pressions accrues, pendant des temps de séjour du mélange de plusieurs substances dans les conditions opératoires de 0,5 à 10 minutes, tout en les mélangeant en même temps d'une manière intensive, à la dégradation de l'amidon tout en formant des amidons façonnables thermoplastiquement et, si désiré, traite le mélange polymère homogénéisé par façonnage à partir de la phase de fusion et/ou le soumet à un broyage en continu.

2. Procédé selon la revendication 1,
caractérisé en ce qu'
on introduit l'amidon ou les dérivés d'amidon sous forme pulvérulente, de préférence sous forme de poudre apte au ruissellement avec des teneurs en eau dans la zone d'environ 5 à 25 % en poids dans le procédé.

3. Procédé selon les revendications 1 et 2,
caractérisé en ce qu'
on effectue l'étape de mélange et la dégradation simultanée de l'amidon dans des malaxeurs fermés ou de préférence dans des extrudeuses et ainsi on met en accord le temps de séjour et les conditions de façonnage les uns avec les autres de façon que soient assurés la dégradation thermoplastifiante de l'amidon et un mélange intime des composants polymères plastifiés.

4. Procédé selon les revendications 1 à 3,
caractérisé en ce qu'
on opère à des températures de produit dans la plage de 100 à 150°C, au moins dans les phases finales de procédé de mélange et dégradation de l'amidon.

5. Procédé selon les revendications 1 à 4,
caractérisé en ce qu'
on opère dans un procédé en continu et à la pression propre qui s'ajuste à la température de procédé dans le système.

6. Procédé selon les revendications 1 à 5,
caractérisé en ce qu'
on effectue le mélange et la dégradation dans des extrudeuses chauffées auxquelles l'amidon en poudre ou le dérivé d'amidon en poudre et les dispersions aqueuses de polymère ainsi que, le cas échéant, les agents de plastification à bas poids moléculaire, sont amenés à l'emplacement d'entrée, d'une manière plus appropriée, séparé l'un de l'autre alors que le mélange de polymères homogénéisé et décomposé- si désiré après un retrait partiel de l'excès d'eau- est produit sous forme d'extrudat et si désiré est encore broyé.

7. Procédé selon les revendications 1 à 6,
caractérisé en ce qu'
on met en oeuvre de l'amidon naturel en poudre et/ou des dérivés d'amidon, ayant une solubilité accrue dans l'eau, en particulier des hydroxyalkyl d'amidon.

8. Procédé selon les revendications 1 à 7,
caractérisé en ce qu'
on met en oeuvre les composés polymères synthétiques ayant un caractère de substance adhésive en quantités en dessous de 50 % en poids, de préférence en quantités en dessous de 40 % en poids et en particulier dans la zone de quantités allant d'environ 10 à 30 % en poids, les % en poids rapportés au mélange de solides dépourvu d'eau et/ou dépourvu d'agent de plastification.

9. Agents adhésifs fusible et/ou pouvant se redisperser sous forme sèche à base d'une combinaison de (CO) polymères en émulsion ayant un caractère de produit adhésif et d'amidon ou de dérivés d'amidon,
caractérisés en ce qu'
ils contiennent les (CO) polymères en émulsion en mélange intime avec des amidons dégradés d'une manière thermoplastifiante et/ou les dérivés d'amidon dégradés d'une manière correspondante, dans lequel la dégradation de l'amidon a été entreprise à des pressions accrues et à des températures d'au moins 90°C et en ajoutant des dispersions de polymère aqueuses et si désiré des agents de plastification à bas poids moléculaire, supplémentaires en présence des (CO) polymères en émulsion tout en mélangeant d'une manière intensive le mélange à plusieurs composants.

10. Agents adhésifs selon la revendication 9,
caractérisés en ce qu'
ils se présentent à température ambiante comme des solides qui conviennent comme colle à fusion, ou de préférence sous forme finement divisée comme poudre de redispersion pour la production d'adhésifs en dispersion par exemple sous forme de pâte.

11. Agents adhésifs selon les revendications 9 et 10,
caractérisés en ce qu'ils sont constitués à base d'amidons naturels dégradés d'une manière thermoplastifiante et/ou de dérivés d'amidon dégradés d'une manière correspondante, ayant une solubilité dans l'eau accrue, pour lesquels comme dérivés de l'amidon il y a en particulier des amidons substitués par un hydroxyalkyle.

12. Agents adhésifs selon les revendications 9 à 11,
caractérisés en ce que
la dégradation thermoplastifiante de l'amidon a eu lieu dans une opération de travail conjointement à l'introduction par mélange homogène des dispersions aqueuses de polymère et en liant l'eau provenant de ces dispersions de polymère dans l'amidon ou dans les dérivés d'amidon.

13. Agents adhésifs selon les revendications 9 à 12,
caractérisés en ce qu'
ils renferment l'amidon(s) dégradé(s) d'une manière thermoplastifiante ou les dérivés d'amidon, en mélange avec des composés polymères thermoplastiques ayant un caractère adhésif, par exemple l'acétate de polyvinyle, le propionate de polyvinyle, les résines poly(meth)acryliques et/ou les copolymères correspondants et/ou ensemble avec des résines de polyuréthanne.

14. Agents adhésifs selon les revendications 9 à 13,
caractérisés en ce qu'
ils renferment les composés polymères synthétiques ayant un caractère adhésif, en quantités en dessous de 50 % en poids, de préférence en quantités en dessous de 40 % en poids et en particulier dans la zone des quantités allant d'environ 10 à 30 % en poids, rapporté au mélange de solides dépourvu d'eau et/ou dépourvu d'agents de plastification, et pour le reste les amidons ou dérivés d'amidon dégradé(s) thermoplastiquement.

15. Agents adhésifs selon les revendications 9 à 14,
caractérisés en ce qu'
ils renferment de l'eau et/ou des agents de plastification à bas poids moléculaire, en quantités d'au moins environ 10 % en poids, de préférence d'au moins environ 15 *%* en poids et en particulier en quantités d'environ 20 à 40 % en poids, rapporté au mélange global, pour lesquels on peut préférer des mélanges qui possèdent comme phase liquide essentiellement ou exclusivement de l'eau et aucune quantité ou des quantités seulement faibles d'agents plastifiants.

16. Agents adhésifs selon les revendications 9 à 15,
caractérisés en ce qu'
ils renferment comme agents de plastification à bas poids moléculaire, des alcools polyfonctionnels inférieurs, en particulier du glycérol, leurs éthers, en particulier les éthers partiaux et/ou des acides hydroxycarboxyliques inférieurs comme l'acide glycolique et/ou l'acide lactique.
